# EUROPEAN PATENT SPECIFICATION

(11) **EP 1 306 828 B1**
(45) Date of publication and mention of the grant of the patent: **22.03.2006**
(21) Application number: 01938542.6
(22) Date of filing: 06.06.2001
(51) Int. Cl.: B01J 35/00, B01J 35/02, B32B 9/00, G10K 11/16, E01F 8/00, E04B 1/84

(54) **SELF-CLEANING TRANSPARENT SOUND BARRIER AND PROCESS FOR PRODUCING THE SAME**
SELBSTREINIGENDE DURCHSICHTIGE SCHALLBARRIERE UND VERFAHREN ZU IHRER HERSTELLUNG
BARRIERE TRANSPARENTE AUTO-NETTOYANTE DE PROTECTION CONTRE LE BRUIT, ET SON PROCEDE DE FABRICATION

(30) Priority: 07.06.2000 JP 2000171121
(43) Date of publication of application: 02.05.2003
(73) Proprietor: Showa Denko K.K., Tokyo 105-8518 (JP)
(72) Inventor: OHMORI, Masahiro, c/o Showa Denko K.K., Chiba-shi, Chiba 267-0056 (JP); SANBAYASHI, Masayuki, c/o Showa Denko K.K., Chiba-shi, Chiba 267-0056 (JP)
(74) Representative: Smith, Norman Ian
(86) International application number: PCT/JP2001/004759
(87) International publication number: WO 2001/095309

(56) References cited:
- EP-A- 0 816 466
- WO-A-99/58451
- JP-A- 3 263 097
- JP-A- 11 081 250
- JP-A- 11 100 526
- JP-A- 2000 086 933
- JP-A- 2000 095 521

## Description

The present invention relates to a high-transparency noise-barrier wall capable of insulating or absorbing noises, which is used on the roadside or wayside of a road or railway having traffic of vehicles, more specifically, the present invention relates to a transparent noise-barrier wall where titanium dioxide particles containing brookite-type crystal are allowed to exist on the surface, and also relates to a noise-barrier panel and a process for producing the wall.

Recently, a case of installing a noise-barrier wall using a material having high transparency (hereinafter simply referred to as a "transparent noise-barrier wall") on the roadside or wayside of a road or railway by taking account of right of light is increasing in urban areas. Furthermore, from the standpoint that conventional opaque materials such as metal plate disadvantageously impair the appearance, replacement by a transparent material is proceeding. The transparent material widely used at present is a molded article of polycarbonate resin or acrylic resin out of plastic materials, because of its high strength.

This high-transparency noise-barrier wall is, however, gradually contaminated by an exhaust gas from a car or a brake dust from a train running on the road or railroad or by floating powder or dust in air and therefore, a cleaning operation must be periodically performed to maintain the transparency. For maintaining the transparency of the transparent noise-barrier wall, a cleaning method by human is most effective, however, this cleaning operation requires complete or partial closing of the road or railroad for a time and this costs highly. Furthermore, this method has many limitations, for example, the cleaning operation cannot be performed frequently in view of traffic safety.

The titanium dioxide is widely known to have a photocatalytic function and actually, is being applied to various uses by making good use of its antifouling, deodorizing or antimicrobial effect, and many application examples thereof are disclosed. Among these photocatalytic functions of titanium oxide, the antifouling function is used for maintaining the transparency of transparent noise-barrier walls using a polycarbonate resin or acrylic resin substrate. To speak more specifically, this is a technique of allowing titanium dioxide to exist on the surface of a noise-barrier wall and thereby decompose the fouling component, where the surface is hydrophilized and as a result, the fouling component is easily cleaned by rainfall or the like. (This technique is disclosed in JP 11-81250, JP 10-37135 and JP10-305091.) The titanium dioxide used in these prior techniques is titanium dioxide comprising anatase-type crystal. As such, the photocatalytic function of titanium dioxide comprising anatase-type crystal is widely known and is being applied to the above-described antifouling, deodorizing and antimicrobial uses, and many application examples thereof are disclosed.

This titanium dioxide comprising anatase-type crystal is known to have effects of photocatalytically decomposing the fouling component and hydrophilizing the surface, however, these functions are exhibited only in case where the surface is sufficiently exposed to light. More specifically, the effect attributable to the photocatalytic reaction of the photocatalytic member applied using titanium dioxide comprising anatase-type crystal cannot be fully brought out in places under insufficient light irradiation (for example; in the shade such as shadow of a building) or in winter season under weak sunlight. In other words, the photocatalytic reaction effect can be utilized only in places exposed to light having sufficiently high intensity (for example, in the daytime of summer or under a lamp of artificially irradiating ultraviolet ray).

Although JP 11-100526 discloses a member having on the surface layer thereof brookite-type crystal, this Publication simply discloses effects identical to those of known conventional anatase-type crystal.

As such, conventional transparent noise-barrier walls using the above-described titanium dioxide comprising anatase-type crystal have problems in that the photochemical decomposition of the fouling component proceeds insufficiently in a place under irradiation of poor light, the surface of the noise-barrier wall is not sufficiently hydrophilized (as defined by the contact angle to water), the whole substrate surface is not satisfactorily wetted even under exposure to rainfall, washing water or steam, a sufficiently high self-cleaning effect is not attained, and the contamination gradually accumulates to decrease the transparency.

This invention has been accomplished in view of the foregoing subjects, and has an object to provide a transparent noise-barrier wall that exhibits photocatalytic activity to decompose fouling component under irradiation of poor light like a shade, and hydrophilizes the surface thereof for easily cleaning fouling component by rainfall and the like, and is ensured with duration of the transparency for a long period of time.

One aspect of the present invention provides a noise-barrier wall according to claim 1.

Another aspect of the present invention provides a method for producing a noise-barrier wall according to claim 9.

The titanium dioxide particle comprises brookite-type crystal and rutile-type crystal, brookite-type crystal and anatase-type crystal, or brookite-type crystal, rutile-type crystal and anatase-type crystal.

The titanium dioxide particles form a surface layer together with the binder material and exist in a fixed state on the surface of a substrate.

The surface layer comprising the titanium dioxide particles and a binder material has a thickness of at least 0.005 µm or more and preferably in the range from 0.005 to 10 b*µ*m.

The surface layer having allowed brookite-type crystal titanium dioxide to substantially exist on the surface thereof has a contact angle to water of 10° or less with a light intensity of 3.5 to 0.005 mW/cm².

The surface layer having allowed brookite-type crystal titanium dioxide to substantially exist on the surface thereof has properties such that the total light transmittance after a contamination cleaning test is at least 86%, that haze value after contamination cleaning test is in the range from 0 to 10%, and that the contact angle to water is 10° or less when light is shield for 96 hours.

The transparent noise-barrier wall has a property such that the change of yellowness after a sunshine carbon arc test for 3,000 hours is 7 or less.

The substrate of the transparent noise-barrier wall comprises an acrylic resin or a polycarbonate resin.

As described above, the present transparent noise-barrier wall photocatalyticaly decomposes fouling component under irradiation of poor light like a shade by existence of brookite-type crystal titanium dioxide on the surface of the wall. Furthermore, the present noise-barrier wall hydrophilizes the surface thereof for easily cleaning fouling component by rainfall and the like. Consequently, the present noise-barrier wall is ensured with duration of the transparency for a long period of time.

As a result of extensive investigations, the invention has been achieved by the following. The inventors found a property wherein titanium dioxides containing brookite-type crystal has high photocatalytic activity even under weak light, applied the property to a transparent noise-barrier wall to decompose fouling component even if the wall is located under a shade, and hydrophilizes the surface thereof for easily cleaning fouling component by rainfall and the like. The present noise-barrier wall is ensured with duration of the transparency for a long period of time.

The present invention is a transparent noise-barrier wall having on the surface thereof titanium dioxide particles containing brookite-type crystal or particles of titanium dioxide, wherein brookite-type crystal titanium dioxide is allowed to substantially exist on the surface so as to photocatalytically decompose the fouling component by weak light irradiation and to hydrophilize the surface for easily cleaning fouling component. The term "substantially" as used herein means that brookite-type crystal titanium dioxide is fixed onto the surface of a resin substrate and allowed to exist in such a state that the titanium dioxide surface is exposed to atmosphere. For example, in the case of the titanium dioxide particles containing brookite-type crystal, the content thereof is preferably 20% by mass or more, more preferably 50% by mass or more (including 100%).

The substrate for use in the transparent noise-barrier wall of the present invention is preferably formed of polycarbonate resin or acrylic resin that are excellent in hardness and may also contain, if desired, a reinforcing material or the like. A larger substance without pillars that insult light is preferable for such substrate. The acrylic resin for use in the present invention means a resin starting from a methacrylate-type polymer, more specifically, a resin worked into a plate using this starting material by molding or casting of a modified resin thereof improved in the flame resistance or impact resistance.

Examples of acrylic resin include Plexiglas SE-3, Plexiglas (both produced by Rohm & Haas Inc.), Acrylite FR, Acrylite MR, Acrypet IR (all produced by Mitsubishi Rayon Co., Ltd.) and Paraglass NF (manufactured by Kuraray Co., Ltd.). The polycarbonate resin means a thermoplastic resin starting from a dioxy compound (e.g., bisphenol) or from a diallyl carbonate and examples thereof include Iupilon, Novarex (both produced by Mitsubishi Engineering-Plastic Corp.) and Panlite (manufactured by Teijin Chemicals Ltd.)

The titanium dioxide particle for use in the present invention means titanium dioxide containing brookite-type crystal and capable of undertaking a photocatalytic reaction using an ultraviolet ray and exerting there high photocatalytic activity even under weak light, which cannot be brought out by the anatase-type crystal. By using this titanium dioxide particle as a photocatalytic medium of the transparent noise-barrier wall, an outstanding effect is provided particularly in the environment under irradiation of weak light.

To speak specifically, for example, a thin film containing the above-described titanium dioxide particles is formed on a transparent resin, and an ultraviolet ray at 365 nm is irradiated thereon for 120 minutes in the environment of weak light irradiation at an intensity of 0.1 to 0.005 mW/cm², as a result, the contact angle to water dropped on the surface thereof becomes 10° or less, so that the photocatalytic activity or hydrophilization can be exerted even in the environment under very weak light.

The titanium dioxide particles containing brookite-type crystal for use in the present invention may be titanium dioxide particles comprising only brookite-type crystal or may be a mixture system containing a rutile-type or anatase-type crystal titanium dioxide particle. In the case where a rutile-type or anatase-type crystal titanium dioxide particle is contained, the ratio of the brookite-type crystal titanium dioxide particle in the titanium dioxide particle is not particularly limited but generally from 1 to 100% by mass, preferably from 10 to 100% by mass, more preferably from 50 to 100% by mass. This is because the brookite-type crystal titanium dioxide is superior in the photocatalytic activity to the rutile-type or anatase-type crystal titanium dioxide.

Examples of the process for producing titanium dioxide particles containing brookite-type crystal include a vapor phase process of heat-treating titanium dioxide particles of anatase-type crystal to obtain titanium dioxide particles containing brookite-type crystal, and a liquid phase process of neutralizing or hydrolyzing a solution of titanium compound such as titanium tetrachloride, titanium trichloride, titanium alkoxide and titanium sulfate, to obtain a titanium dioxide sol having dispersed therein titanium dioxide particles containing brookite-type crystal.

These processes are not particularly limited as long as titanium dioxide particles containing brookite-type crystal can be obtained, however, in view of photocatalytic activity and handleability of the substance obtained and when a titanium dioxide thin film is formed, by taking account of the transparency, adhesive property and hardness of the film, the processes described in the Examples of the present invention are preferred.

More specifically, these preferred processes are a process where titanium tetrachloride is added to hot water of 75 to 100°C, the titanium tetrachloride is hydrolyzed while controlling the chloride ion concentration at a temperature of from 75°C to the boiling point of the solution, preferably from 90 to 95°C, and thereby titanium dioxide particles containing brookite-type crystal are obtained in the form of a titanium dioxide sol, and a process where titanium tetrachloride is added to water containing either one or both of nitrate ion and phosphate ion, the titanium tetrachloride is hydrolyzed while controlling the total concentration of chloride ion, nitrate ion and phosphate ion at a temperature of from 75°C to the boiling point of the solution, more preferably from 90 to 95°C, and thereby titanium dioxide particles containing brookite-type crystal are obtained in the form of a titanium dioxide sol.

The titanium dioxide particles containing brookite-type crystal are not particularly limited on the size, however, the average particle size thereof is preferably at least 0.005 µm, preferably from 0.005 to 0.1 µm, more preferably from 0.01 to 0.05 µm. This is because if the average particle size exceeds 0.1 µm, the photocatalytic activity decreases and the effects such that the fouling is hard to occur or even if fouled, the organic substance can be easily decomposed to clean the fouling may not be obtained. Moreover, the transparency of titanium dioxide particle decreases and if such titanium dioxide particles are allowed to exist on the surface of a transparent noise-barrier wall, the color of the titanium dioxide particle disadvantageously affects the color of the transparent noise-barrier wall. If the average particle size is less than 0.005 µm, handling in the production process becomes difficult. The specific surface area of the titanium dioxide particle is preferably 20 m²/g or more.

The thus-obtained titanium dioxide particles may be allowed to exist on the surface of a transparent noise-barrier wall by a method such that a titanium dioxide particle sol is coated on the surface of a substrate for of a transparent noise-barrier wall, dried and then heat-treated to fix the titanium dioxide particles to the surface of the transparent noise-barrier wall or by a method such that titanium dioxide particle is mixed with a coating material or the like, coated on the surface of a substrate for of a transparent noise-barrier wall, dried and then heat-treated.

The tetramethoxysilane binder increases the adhesion strength between the transparent noise-barrier wall and titanium dioxide particles in the coating agent of titanium dioxide particles containing brookite-type crystal and thereby improves the film hardness. By using such a binder, the titanium dioxide particles can be prevented from dropping off from the transparent noise-barrier wall and the effect of retarding the fouling and if fouled, facilitating the cleaning can be maintained for a long period of time.

The method for applying the coating agent of titanium dioxide particles containing brookite-type crystal onto a transparent noise-barrier wall is not particularly limited and any known method may be used, such as spin coating method, flow coating method, dip coating method, spray coating method, bar coating method, roller coating method, brush coating method and soaking method. Among these, a spray coating method and a roller coating method are preferred because the substrate is large.

In the case of coating the coating agent of titanium dioxide particles containing brookite-type crystal on the surface of a substrate for the transparent noise-barrier wall and drying the solution to fix the titanium dioxide particles to the surface, a dispersant or surfactant may be added to the coating agent depending on the coating conditions. The transparent noise-barrier wall is preferably subjected to an undercoat treatment of previously coating a binder comprising an inorganic material to form an undercoat layer of the inorganic material. Examples of the inorganic undercoat material include known hard-coat materials for plastics, such as Si-, Ti-, Zr- or Al-containing material. In the case of using an Si-containing material, a single binder for use in the present invention can be served to this effect.

With respect to the shape of titanium dioxide particles containing brookite-type crystal according to the present invention, the particles are, for example, present on the adhering surface almost in the block form. The surface thereof is covered with oxygen or a hydroxyl group in air. The silicon oxide of forming a silanol bond or a precursor thereof, or the metal oxide having hydroxyl group on the surface or a precursor thereof, which are used as a binder, is condensed with and thereby firmly bonded to both the transparent noise-barrier wall and the surface of titanium dioxide particle and therefore, even with a small amount of binder, an -excellent adhesive strength can be effectively brought out.

When a thin film of titanium dioxide containing brookite-type crystal is formed using such a binder or binder precursor, the hardness thereof is, in terms of pencil hardness, 3H or more in the case of using silicon oxide, titanium dioxide or a precursor thereof, that is, a film having sufficiently high film hardness and difficult of dropping off is formed.

The amount of tetramethoxysilane added is generally from 5 to 50% by mass as calculated in terms of an oxide, based on the titanium dioxide. If the amount added exceeds 50% by mass, the ratio of titanium dioxide particles buried in the binder increases and therefore, the photocatalytic activity of the coating decreases, whereas if it is less than 5% by mass, the effect of the binder cannot be obtained and the titanium dioxide particles disadvantageously drop off.

The method for adding a binder or binder precursor is not particularly limited but examples thereof include a method of adding a binder or binder precursor to a sol having dispersed therein titanium dioxide particles containing brookite-type crystal and then coating the sol on a transparent noise-barrier wall, and a method of spray-coating a titanium dioxide sol and at the same time, coating a binder or binder precursor using another spray.

In the case of coating a coating agent of titanium dioxide particles containing brookite-type crystal on a transparent noise-barrier wall and then drying the agent, an appropriate solvent may be added as-a leveling agent so as to increase the drying speed or elevate the smoothness of the thin film. When the titanium dioxide particles containing brookite-type crystal are dispersed in water, a hydrophilic organic solvent such as ethyl alcohol, isopropyl alcohol and n-butyl alcohol is usually used.

After a coating agent of titanium dioxide particles containing brookite-type crystal is coated on a transparent noise-barrier wall having formed thereon a protect film, drying is performed so as to fix the titanium dioxide particles to the surface. The atmosphere at the drying is not particularly limited and the drying may be performed in air, in vacuum or in an inert gas but is usually performed in air. The drying temperature varies depending on the construction material of the transparent noise-barrier wall and the kind of the binder or binder precursor, but is usually from 20 to 100°C. The drying time is usually from 5 minutes to 60 hours, preferably from 15 minutes to 24 hours. If desired, a forced drying method using a dryer or the like may also be used.

In the thus-obtained transparent noise-barrier wall where titanium dioxide particles containing brookite-type crystal are allowed to exist on the surface, the thin film in which the titanium dioxide is present has a thickness of at least 0.005 µm, preferably from 0.005 to 10 µm, more preferably from 0.01 to 5 µm. If the thickness is less than 0.005 µm, the photocatalytic activity or hydrophilicity is not sufficiently high, whereas if it exceeds 10 µm, the photocatalytic reaction takes place only near the surface of the titanium dioxide thin film, as a result, titanium dioxide particles not participating in the photocatalytic reaction increase and this is not economically advantageous. Moreover, these particles readily drop off from the transparent noise-barrier wall and also, the transparency of transparent noise-barrier wall disadvantageously decreases.

The transparent noise-barrier wall having allowed titanium dioxide particles containing brookite-type crystal to exist on the surface of the present invention decomposes the adhered contamination by the photocatalytic function of titanium dioxide particles containing brookite-type crystal which has activity higher than that of anatase-type crystal. Furthermore, the titanium dioxide thin film formed from a coating agent of titanium dioxide particles containing brookite-type crystal has excellent hydrophilicity and the contact angle thereof to water is 10° or less even under light having a low intensity (the light intensity is in the range from 0.1 to 0.005 mW/cm²), so that the contamination such as dust in air, exhaust gas from automobiles or brake dust from electric trains and fine particles containing the exhaust gas, is retarded from adhering to the transparent noise-barrier wall and even if fouled, the contamination can be easily cleaned.

Furthermore, the film formed from a coating agent of titanium dioxide particles containing brookite-type crystal also has excellent transparency and does not affect the color of the transparent noise-barrier wall. In addition, the film is firmly bonded to the surface of the protect layer formed on the noise-barrier wall surface, by virtue of the binder or binder precursor, so that the film can be favored with excellent film hardness and retarded from dropping off and the above-described effect of the titanium dioxide particles containing brookite-type crystal of the present invention can be maintained for a long period of time.

The above effect is not attained by conventional titanium dioxide particles mainly comprising anatase-type crystal but not containing brookite-type crystal and this is considered to occur from the following reasons. The crystal structure of titanium dioxide is fundamentally constructed by a combination of units each comprising one titanium atom and six oxygen atoms surrounding the titanium atom. The photocatalytic reaction of titanium dioxide is said to take place upon exchange of electrons between the titanium atom and the oxygen atom. Therefore, the bonding state of the titanium atom to oxygen atoms (six bonds) is expected to have a great effect on the photocatalytic activity.

As a result of structural analysis of crystals, it has been verified that in both the anatase-type crystal and the rutile-type crystal, those six bonds are constituted by two pairs of bond distances. More specifically, the anatase-type crystal has a titanium-oxygen bonding state such that two bonds have a bond distance of 0.19656 nm and four bonds have a bond distance of 0.19370 nm, and the rutile-type crystal has a state such that two bonds have a bond distance of 0.19834 nm and four bonds have a bond distance of 0.19462 nm. In other words, the bonding state is verified to have a very high symmetry.

On the other hand, in the brookite-type crystal, these six bonds all are different and six bond distances are present. The minimum is 0.18651 nm and the maximum is 0.20403 nm. As a result, there is no symmetry and it is estimated that all bonds participate in the photocatalytic function and very high activity is revealed.

In the transparent noise-barrier wall of the present invention, as described above, the brookite-type crystal used has a capability of exerting effective photocatalytic activity and hydrophilization effect even under irradiation of weak light and at the same time, the substrate of the noise-barrier wall is a resin having high transparency, so that the titanium dioxide particles can undertake a photocatalytic reaction even by light indirectly irradiated from the inside of the resin and this can bring about unexpected and excellent effects including the long-term duration.

The contamination cleaning test is a test performed for evaluating the cleaning aptitude of the photocatalyst such that noise-barrier wall is fouled by an exhaust gas from a diesel car in idling and then an ultraviolet ray is irradiated thereon with a predetermined light intensity to decompose the organic components by the photocatalytic reaction and thereby provide a state such that the fouling is lifted. Thereafter, cleaning with a predetermined amount of shower water (corresponding to rainfall) is performed and the transmittivity of transmitted light with respect to all light is obtained for evaluating the transparency.

The present invention is described in greater detail below by referring to the Examples, however, the present invention should not be construed as being limited thereto.

### Example 1:

Into a glass reaction tank having a content volume of 1.5 L and equipped with a reflux condenser and a stirring blade, 945 mL of distilled water previously heated to 95°C was charged. Thereafter, while rotating the stirring blade at about 200 rpm and keeping the liquid temperature in the tank at 95°C, 56 g of an aqueous titanium tetrachloride solution (Ti content: 14.3% by mass, specific gravity: 1.5 g/cm³) was gradually added dropwise to the reaction tank over about 1 hour. With the progress of the dropwise addition, the solution within the tank started gradually hydrolyzing and the whole liquid became a turbid sol.

After the completion of dropwise addition, the solution was heated near the boiling point (104°C) and kept at the same temperature for 1 hour to completely hydrolyze the titanium tetrachloride. The concentration of the thus-obtained sol was measured and found to be 2% by mass in terms of titanium dioxide. The obtained sol was cooled and concentrated and the chlorine generated by the hydrolysis was removed by the electrodialysis using an electrodialyser Model G3 manufactured by Asahi Kasei Corp. to obtain an aqueous dispersion titanium dioxide sol having a pH of 4.0 (chloride ion: about 400 ppm, titanium dioxide concentration: 20% by mass). The particles in the sol were observed through a transmission-type electron microscope, as a result, the particles had a particle size of 0.01 to 0.02 µm.

In order to examine the crystal structure of titanium dioxide particles contained in the sol, this sol was dried in a vacuum dryer at 60°C and the obtained titanium dioxide particles were analyzed by X-ray diffraction. The X-ray diffraction was performed using an X-ray diffraction analyzer (RAD-B Rotor Flex, manufactured by Rigaku Corp.) and a Cu bulb. As a result, a peak of 20=30.8° indicating the diffraction of the (121) face of brookite-type crystal was detected. The peaks indicating rutile-type crystal and anatase-type crystal were prima facie not detected.

Tetramethoxysilane as a silicone-containing adhesive was added for coating the water dispersion titanium dioxide sol containing brookite-type crystal titanium dioxide obtained above, and ethyl alcohol was added to improve the drying speed, thereby preparing a photocatalytic coating material having the composition shown in Table 2.

Tosguard 510 produced by GE Toshiba Silicones was diluted with isopropyl alcohol and spray-coated with the surface of an acrylic resin reinforced by inserting a metal mesh into the inside so as to improve the strength(2 m in height × 4 m in width × 15 mm in thickness) to form a film, serving as a protective film, having a film thickness of 150 nm in order to prevent deteriorating due to the photocatalytic action of titanium dioxide.

Next, on this protective film, about 200 mL of the photocatalytic coating material shown in Table 2 was spray-coated and dried by leaving it to stand in atmosphere for 24 hours to manufacture a transparent noise-barrier wall having allowed titanium dioxide particles containing brookite-type crystal to exist on the surface. At this time, the layer of titanium dioxide particles containing brookite-type crystal had a thickness of 200 nm.

### Example 2:

Titanium tetrachloride was hydrolyzed in the same manner as in Example 1 except that before adding the aqueous titanium tetrachloride solution, hydrochloric acid was added to the reaction tank to a concentration of 1 mol/L as HCl. The obtained sol was treated in the same manner as in Example 1 to obtain a water dispersion titanium dioxide sol. The particles in the sol were observed in the same manner as in Example 1, as a result, the particles had a particle size of 0.01 to 0.03 µm.

The crystal structure of titanium dioxide particles contained in this sol was examined in the same manner as in Example 1. As a result, a peak indicating the diffraction of (121) face of brookite-type crystal, and a peak indicating the diffraction of (110) face, which is a main peak of rutile-type crystal, were detected. Also, a peak indicating the diffraction of (004) face of anatase-type crystal was detected. Accordingly, the obtained sol was a mixture containing brookite-type crystal, anatase-type crystal and rutile-type crystal. The contents of these crystals were calculated as follows.

The brookite-type crystal, anatase-type crystal and rutile-type crystal of titanium dioxide each had an X-ray diffraction peak shown in Table 1 (extracted from JCPDS card) and as seen from the d value thereof, these crystals overlap in the major part. Particularly, the main peak d values of the brookite-type crystal and the anatase-type crystal are 0.351 nm and 0.352 nm, respectively, the brookite-type crystal has a peak also at 0.347 nm, revealing that these three peaks substantially overlap.

As such, the intensity ratio of main peaks between the brookite-type crystal and the anatase-type crystal cannot be obtained. Therefore, in the present invention, a peak of (121) face of the brookite-type crystal, which does not overlap the peak of anatase-type crystal, was used and the intensity ratio of the peak at the position where those three peaks overlap (peak intensity of (121) face of brookite-type crystal)/(peak intensity at the position having the overlap of three peaks) was determined. From the value obtained, the contents of brookite-type crystal titanium dioxide and anatase-type crystal titanium dioxide were determined. With respect to the rutile-type crystal, the content thereof was obtained from the intensity ratio of the peak indicating the diffraction of (110) face as the main peak of the rutile-type crystal to the peak at the position where those three peaks overlap (main peak intensity of rutile-type crystal)/(peak intensity at the position having the overlap of three peaks).

As a result, (peak intensity of (121) face of brookite-type crystal)/(peak intensity at the position having the overlap of three peaks) was 0.38 and (main peak intensity of rutile-type crystal)/(peak intensity at the position having the overlap of three peaks) was 0.05. From these, it was known that the sol contained about 70% by mass of brookite-type crystal, about 1.2% by mass of rutile-type crystal and about 28.8% by mass of anatase-type crystal.

To the thus-obtained an aqueous dispersion titanium oxide sol containing brookite-type crystal titanium dioxide, ethyl alcohol was added to improve the drying speed and thereby a photocatalytic coating material having the composition shown in Table 2 was prepared.

A transparent noise-barrier wall (noise-barrier wall panel) having allowed titanium dioxide particles to exist on the surface thereof was manufactured in the same manner as in Example 1 except for using the photocatalytic coating material obtained above.

**Table 1**

| Brookite (29-1360) | | | Anatase (21-1272) | | | Rutile (21-1276) | | |
|---|---|---|---|---|---|---|---|---|
| d Value, nm | Crystal Face | Intensity Ratio | d Value, nm | Crystal Face | Intensit y Ratio | d Value, nm | Crysta 1 Face | Intensity Ratio |
| 0.351 | 120 | 100 | 0.352 | 101 | 100 | 0.325 | 110 | 100 |
| 0.290 | 121 | 90 | 0.189 | 200 | 35 | 0.169 | 221 | 60 |
| 0.347 | 111 | 80 | 0.238 | 004 | 20 | 0.249 | 101 | 50 |

### Example 3:

A substrate material (1 m in height × 2 m in width × 5 mm in thickness) was manufactured from a molded polycarbonate resin by an extrusion molding method. Into the inside of this molded polycarbonate resin, a material for increasing the strength was not particularly inserted. A transparent noise-barrier wall having allowed titanium dioxide particles containing brookite-type crystal to exist on the surface thereof was manufactured in the same manner as in Example 1 except for using the polycarbonate resin obtained above.

### Example 4:

A transparent noise-barrier wall having allowed titanium dioxide particles containing brookite-type crystal to exist on the surface thereof was manufactured in the same manner as in Example 3 except for using the photocatalytic coating material prepared in Example 2 (shown in Table 2).

### Comparative Example 1:

A transparent noise-barrier wall having allowed titanium dioxide particles to exist on the surface thereof was manufactured in the same manner as in Example 1 except that a coating material (shown in Table 2) prepared using a titanium dioxide sol (STS-02, produced by Ishihara Sangyo Kaisha, Ltd.) not containing brookite-type crystal but comprising anatase-type crystal, where (peak strength of (121) face of brookite-type crystal)/(peak intensity at the position having the overlap of three peaks)=0 and (main peak intensity of rutile-type crystal)/(peak intensity at the position having the overlap of three peaks)=0, was used in place of the titanium dioxide particles containing brookite-type crystal.

### Comparative Example 2:

A transparent noise-barrier wall having allowed titanium dioxide particles to exist on the surface thereof was manufactured in the same manner as in Example 1 except that a coating material (shown in Table 2) prepared using a titanium dioxide sol (P-25, produced by Nippon Aerosil) not containing brookite-type crystal but comprising anatase-type crystal and rutile-type crystal, where (peak strength of (121) face of brookite-type crystal)/(peak intensity at the position having the overlap of three peaks)=0 and (main peak intensity of rutile-type crystal)/(peak intensity at the position having the overlap of three peaks)=0.16, was used in place of the titanium dioxide particles containing brookite-type crystal.

**Table 2**

| Examples and Comparative Examples | TiO₂, mass% | Crystal Type* | Tetramethoxysilane as SiO₂, mass% | Ethyl Alcohol, mass% | Kind of Substrate |
|---|---|---|---|---|---|
| Example 1 | 3.5 | B | 0.7 | 75 | acryl |
| Example 2 | 3.0 | B+A+R | 0.5 | 75 | acryl |
| Example 3 | 2.0 | B | 0.5 | 75 | Polycarbonate |
| Example 4 | 1.5 | B+A+R | 0.3 | 75 | polycarbonate |
| | | | | | |
| Comparative Example 1 | 3.5 | A | 0.7 | 75 | acryl |
| Comparative Example 2 | 3.5 | A+R | 0.7 | 75 | acryl |

| | | | | | |
|---|---|---|---|---|---|
| * A: anatase-type crystal, B: brookite-type crystal, C: rutile-type crystal. | | | | | |

### Evaluation of Noise-Barrier Wall of Present Invention

### <Contact Angle to Water>

The transparent noise-barrier walls having allowed to titanium dioxide particles to substantially exist on the surface obtained in Examples and Comparative Examples above were measured on the contact angle. In the measurement, Model CA-D manufactured by Kyowa Interface Science Co., Ltd. was used, an ultraviolet ray having a light intensity of 0.3 mW/cm² at 365 nm was irradiated for 120 minutes, and the contact angle to water was measured before the irradiation, immediately after the irradiation and when light is shield for 96 hours. The results are shown in Table 3.

**Table 3**

| Example and Comparative Example | Contact Angle to Water | | |
|---|---|---|---|
| | Before irradiating | Immediately after irradiation | When light is shielded for 96 hours |
| Example 1 | 14° | 5° | 6° |
| Example 2 | 18° | 7° | 9° |
| Example 3 | 17° | 6° | 8° |
| Example 4 | 20° | 8° | 9° |
| Comparative Example | 25° | 18° | 23° |
| Comparative Example | 22° | 15° | 19° |

### <Cleaning Aptitude>

Then, the transparent noise-barrier walls having allowed titanium dioxide particles to exist on the surface obtained in Examples and Comparative Examples above were measured on the cleaning aptitude. An exhaust gas from a diesel car in idling was sprayed on each of the transparent noise-barrier walls obtained in Examples and Comparative Examples above to provide a fouled surface state. After irradiating an ultraviolet ray (light intensity at 365 nm: 0.3 mW/cm²) on each noise-barrier wall for 1 hour, 5 L or 1 L of shower water at a water temperature of 20°C was poured on the transparent noise-barrier wall and the degree of cleaning of the contamination was evaluated with an eye. Also, the above-described fouling-cleaning step was repeated 10 times and then the degree of cleaning was evaluated in the same manner with an eye. The results obtained are shown in Table 4.

**Table 4**

| Example and Comparative Example Example | Degree Cleaning, 5L 5L | of Degree Cleaning, 1L 1L | cleaning After Cleaning After 10 Times Repetition, 5L | Degree of Cleaning After 10 Times Repetition, 1L |
|---|---|---|---|---|
| Example 1 | ⊚ | ⊚ | ⊚ | ○ |
| Example 2 | ⊚ | ⊚ | ⊚ | ○ |
| Example 3 | ⊚ | ⊚ | ⊚ | ○ |
| Example 4 | ⊚ | ⊚ | ⊚ | ○ |
| Comparative Example 1 | ○ | × | × | × |
| Comparative Example 2 | × | × | × | × |

| | | | | |
|---|---|---|---|---|
| ⊚ : The contamination is quickly cleaned. | | | | |
| ○ : The contamination is slightly difficult to clean. | | | | |
| × : The contamination cannot be cleaned. | | | | |

### <Maintenance of Transparency>

The transparent noise-barrier walls obtained in Examples and Comparative Examples were evaluated on the maintenance of transparency. The light transmittance (wavelength region: 450 to 700 nm) was measured after the above-described 10 times repetition in the case of 5-L shower water in the evaluation of cleaning aptitude and also immediately after the production of the noise-barrier wall. In the measurement, a haze meter Model TC-HIII DP manufactured by Tokyo Denshoku Co., Ltd. as used and the total light transmittance and the haze value were determined according to the JIS K6718 measuring method. The results are shown in Table 5.

**Table 5**

| Example and Comparative Example | Total Light Transmittance (%) | | Haze Value (%) | |
|---|---|---|---|---|
| | Immediately After Production | After 10 Times Cycle | Immediately After Production | After 10 Times Cycle |
| Example 1 | 93 | 92 | 0.2 | 0.2 |
| Example 2 | 92 | 90 | 0.3 | 0.5 |
| Example 3 | 91 | 89 | 1.6 | 1.7 |
| Example 4 | 88 | 86 | 0.8 | 1.0 |
| Comparative Example 1 | 93 | 80 | 6.9 | 17.2 |
| Comparative Example 2 | 85 | 65 | 9.3 | 20.6 |

### <Weatherproof Aptitude>

Weatherproof aptitude of the noise-barrier wall obtained from Examples was measured. The noise-barrier wall was exposed for 3,000 hours (JIS A1415 test method) using a sunshine weather meter WEL-SUN-DC manufactured by Suga Test Instruments Co., Ltd. as a sunshine carbon ark exposure acceleration test. Thereafter, an ultraviolet ray at 365 nm is irradiated thereon for 120 minutes at an intensity of 0.3 mW/cm², as a result, the contact angle to water was evaluated by the identical devise used for <Contact Angle to Water> evaluation test. The degree of yellowness immediately after the exposure acceleration test was measured using a spectrophotometer Model CM-3700d manufactured by Minolta Co., Ltd. to calculate the change of yellowness index(JIS K7105 method).

**Table 6**

| Example | Contact angle to water | Change of yellowness index |
|---|---|---|
| Example 1 | 5° | 2.0 |
| Example 2 | 8° | 4.5 |
| Example 3 | 7° | 3.1 |
| Example 4 | 9° | 5.8 |

As shown in Tables 4, 5 and 6, the transparent noise-barrier wall having allowed titanium dioxide particles containing large amount of brookite-type crystal to exist on the surface exhibited high transparency maintenance and even when fouled, the contamination was easily cleaned.

### Industrial Applicability:

As described in the foregoing pages, the transparent noise-barrier wall of the present invention wall having allowed titanium dioxide particles containing brookite-type crystal to exist on the surface, so that high photocatalytic activity can be brought out even with a very weak light intensity, for example, in the shadow between buildings, and therefore, the hydrophilization phenomenon of reducing the contact angle to water can be similarly exerted with a weak light intensity.

Furthermore, the transparent noise-barrier wall having allowed titanium dioxide particles containing brookite-type crystal to exist on the surface of the present invention has good hydrophilicity and is readily wetted with water comparing with a wall having allowed titanium dioxide particles without containing brookite-type crystal, so that the substrate is entirely wetted with a small amount of water and when fouled, the contamination can be easily cleaned.

In the transparent noise-barrier wall of the present invention, the noise-barrier substrate is a resin having high transparency, so that the above-described photocatalytic activity and hydrophilization performance can be effectively brought out even with light indirectly irradiated from the inside of the resin (from the substrate base).

As a result, even when the transparent noise-barrier wall of the present invention is fouled, the self-cleaning effect can be easily exerted and maintained over a long period of time. As the content of the brookite-type crystal in the titanium dioxide particles is larger, this effect is higher.

In the present invention, since the titanium dioxide particles containing brookite-type crystal or the coating film containing these particles has excellent transparency, the transparency and appearance of the resin itself can be maintained. For example, when the noise-barrier substrate is an acrylic resin or a polycarbonate resin, the obtained noise-barrier wall having transparent titanium dioxide particles can have a total light transmittance of 86% or more.

## Claims

1. A transparent noise-barrier wall compprising a resin substrate having on the surface thereof titanium dioxide particles, wherein brookite-type crystal titanium dioxide is allowed to substantially exist on the surface, is fixed onto the surface through an undercoat material, and form a surface layer together with tetramethoxysilane as a binder material.

2. The transparent noise-barrier wall as claimed in claim 1, wherein the titanium dioxide particles containing brookite-type crystal at least 20% by mass in the particles.

3. The transparent noise-barrier wall as claimed in claim 1, wherein the titanium dioxide particles containing brookite-type crystal at least 50% by mass in the particles.

4. The transparent noise-barrier wall as claimed in claim 1, wherein the titanium dioxide particles containing brookite-type crystal are titanium dioxide particles containing brookite-type crystal substantially 100% by mass in the particles.

5. The transparent noise-barrier wall as claimed in claims 1, wherein said titanium dioxide particle comprises brookite-type crystal and rutile-type crystal, brookite-type crystal and anatase-type crystal, or brookite-type crystal, rutile-type crystal and anatase-type Crystal.

6. The transparent noise-barrier wall as claimed in any one of claims 1 to 5, wherein the surface layer comprising said titanium dioxide particles and a binder material has a thickness of at least 0.005 µm or more.

7. The transparent noise-barrier wall as claimed in any one of claims 1 to 6, wherein said surface layer has a thickness of 0.005 to 10 µm.

8. A soundproof panel unit which constitutes the transparent boise-barrier wall described in any one of claims 1 to 7.

9. A method for producing a transparent noise-barrier wall having a photocatalytic activity, comprising coating a coating agent of titanium dioxide particles on the surface of a resin substrate of a transparent noise-barrier wall **characterised in that** said titanium dioxide particles contain brookite-type crystal titanium dioxide, fixing onto the surface through an undercoat material and forming a surface layer together with tetramethoxysilane as a binder material.

10. The method for producing a transparent noise-barrier wall having a photocatalytic activity as claimed in claim 9, wherein the substrate of the transparent noise-barrier wall is an acrylic resin or a polycarbonate resin.

## Patentansprüche

1. Durchsichtige Lärmschutzwand umfassend ein Trägermaterial aus Kunstharz, auf dessen Oberfläche Titandioxidpartikel angeordnet sind, wobei Titandioxid aus einem Brookitkristall im Wesentlichen auf der Oberfläche vorhanden ist, durch ein Voranstrichmaterial an der Oberfläche fixiert und gemeinsam mit Tetramethoxysilan als Bindematerial eine Oberflächenschicht bildend.

2. Durchsichtige Lärmschutzwand nach Anspruch 1, wobei die Titandioxidpartikel zu mindestens 20 Massen-% der Partikel Brookitkristall enthalten.

3. Durchsichtige Lärmschutzwand nach Anspruch 1, wobei die Titandioxidpartikel zu mindestens 50 Massen-% der Partikel Brookitkristall enthalten.

4. Durchsichtige Lärmschutzwand nach Anspruch 1, wobei die Brookitkristall enthaltenden Titandioxidpartikel solche Titandioxidpartikel sind, die im Wesentlichen zu 100 Massen-% der Partikel Brookitkristall enthalten.

5. Durchsichtige Lärmschutzwand nach Anspruch 1, wobei das Titandioxidpartikel umfasst ein Brookitkristall und ein Rutilkristall, ein Brookitkristall und ein Anataskristall, oder ein Brookitkristall, ein Rutilkristall und ein Anataskristall.

6. Durchsichtige Lärmschutzwand nach einem der Ansprüche 1 bis 5, wobei die Oberflächenschicht, die die Titandioxidpartikel und ein Bindemittel umfasst, eine Dicke von mindestens 0,005 µm oder mehr hat.

7. Durchsichtige Lärmschutzwand nach einem der Ansprüche 1 bis 6, wobei die Oberflächenschicht eine Dicke von 0,005 bis 10 µm hat.

8. Eine schalldichte Platteneinheit, die die in einem der Ansprüche 1 bis 7 beschriebene durchsichtige Lärmschutzwand bildet.

9. Verfahren zum Herstellen einer durchsichtigen Lärmschutzwand mit photokatalytischer Aktivität, umfassend das Beschichten der Oberfläche eines Trägermaterials aus Kunstharz einer durchsichtigen Lärmschutzwand mit einem Beschichtungsmittel aus Titandioxidpartikeln, **dadurch gekennzeichnet, dass** die Titandioxidpartikel ein Titandioxid aus Brookitkristall enthalten, durch ein Voranstrichmittel an der Oberfläche fixiert sind und gemeinsam mit Tetramethoxysilan als Bindemittel eine Oberflächenschicht bilden.

10. Verfahren zum Herstellen einer durchsichtigen Lärmschutzwand mit photokatalytischer Aktivität nach Anspruch 9, wobei das Trägermaterial der durchsichtigen Lärmschutzwand ein Akrylharz oder ein Polycarbonatharz ist.

## Revendications

1. Mur anti-bruit transparent comprenant un substrat de résine présentant à la surface de celui-ci des particules de dioxyde de titane, dans lequel du dioxyde de titane cristallin de type brookite est mis en situation d'exister substantiellement à la surface, est fixé sur la surface par l'intermédiaire d'un matériau de sous-couche, et forme une couche de surface en association avec du tétraméthoxysilane en tant que matériau liant.

2. Mur anti-bruit transparent tel que revendiqué dans la revendication 1, dans lequel les particules de dioxyde de titane contenant des cristaux de type brookite représentent au moins 20 % en masse des particules.

3. Mur anti-bruit transparent tel que revendiqué dans la revendication 1, dans lequel les particules de dioxyde de titane contenant des cristaux de type brookite représentent au moins 50 % en masse des particules.

4. Mur anti-bruit transparent tel que revendiqué dans la revendication 1, dans lequel les particules de dioxyde de titane contenant des cristaux de type brookite sont des particules de dioxyde de titane contenant des cristaux de type brookite représentant substantiellement 100 % en masse des particules.

5. Mur anti-bruit transparent tel que revendiqué dans la revendication 1, dans lequel lesdites particules de dioxyde de titane comprennent des cristaux de type brookite et des cristaux de type rutile, des cristaux de type brookite et des cristaux de type anatase, ou des cristaux de type brookite, des cristaux de type rutile et des cristaux de type anatase.

6. Mur anti-bruit transparent tel que revendiqué dans l'une quelconque des revendications 1 à 5, dans lequel la couche de surface comprenant lesdites particules de dioxyde de titane et un matériau liant possède une épaisseur d'au moins 0,005 µm ou plus.

7. Mur anti-bruit transparent tel que revendiqué dans l'une quelconque des revendications 1 à 6, dans lequel ladite couche de surface possède une épaisseur allant de 0,005 à 10 µm.

8. Unité de panneau d'insonorisation qui constitue le mur anti-bruit transparent décrit dans l'une quelconque des revendications 1 à 7.

9. Procédé de production d'un mur anti-bruit transparent possédant une activité photocatalytique, comprenant l'application d'un agent de revêtement de particules de dioxyde de titane à la surface d'un substrat en résine d'un mur anti-bruit transparent, **caractérisé en ce que** lesdites particules de dioxyde de titane contiennent du dioxyde de titane cristallin de type brookite, **en ce qu'**il comprend en outre la fixation sur la surface par l'intermédiaire d'un matériau de sous-couche, et la formation d'une couche de surface en association avec du tétraméthoxysilane en tant que matériau liant.

10. Procédé de production d'un mur anti-bruit transparent possédant une activité photocatalytique tel que revendiqué dans la revendication 9 dans lequel le substrat du mur anti-bruit transparent est une résine acrylique ou une résine de polycarbonate.
